# EUROPEAN PATENT APPLICATION

(11) **EP 2 752 441 A1**
(43) Date of publication of application: **09.07.2014**
(21) Application number: 12827488.3
(22) Date of filing: 13.01.2012
(51) Int. Cl.: C08J 3/16, C08F 2/32, C08F 220/56

(54) **PULVERULENT HYDROPHILIC POLYMER, METHOD FOR PRODUCING SAME, AND FLOCCULATION TREATMENT AGENT USING SAME**

(30) Priority: 29.08.2011 JP 2011185620
(71) Applicant: HYMO CORPORATION, Shinagawa-ku, Tokyo 141-0031 (JP)
(72) Inventor: TONAMI, Manabu, Tokyo 141-0031 (JP); AOYAMA, Kiyoshi, Tokyo 141-0031 (JP); HIRATA, Kazuyuki, Tokyo 141-0031 (JP)
(74) Representative: Twelmeier Mommer & Partner
(86) International application number: PCT/JP2012/051139
(87) International publication number: WO 2013/031245

(57) **Abstract**

Provided is a powdery hydrophilic polymer by aggregating a hydrophilic polymer comprising a water-in-oil emulsion in a liquid form by emulsion breaking and granulating the aggregate, followed by drying. As an emulsion breaker, ionic surfactants, nonionic surfactants having an HLB value of 11 to 20, or oil-soluble polymer compounds having a hydrophilic group and a hydrophobic group can be used. The powdery hydrophilic polymer obtained by this method exhibits excellent effects as a flocculating agent.

## Description

### TECHNICAL FIELD

The present invention relates to a powdery hydrophilic polymer, a method for producing the same, and use application thereof. More specifically, the present invention relates to a powdery hydrophilic polymer produced by aggregating a hydrophilic polymer comprising a water-in-oil emulsion by emulsion breaking and granulating the aggregate followed by dying; a method for producing the powdery hydrophilic polymer; and a flocculating agent using the same.

### BACKGROUND ART

In general, hydrophilic polymers are commercially available in a solution form, dry powder solid form, dispersion liquid form, and water-in-oil emulsion form. In the solution form, solutions of hydrophilic polymers with molecular weights of several million results in having a higher viscosity, it causes handling problems even at a concentration of about 5%. In the dispersion liquid or water-in-oil emulsion, the concentration of hydrophilic polymers is about 15% to 50%, which is relatively low in viscosity and thus easy to handle.

In particular, the formation of the water-in-oil emulsion can produce polymers having a high degree of crosslinked structure.

Patent Literature 1 illustrates a method for using a water-in-oil emulsion of a crosslinked polymer of a water-soluble cationic monomer as a retention aid and drainage aid in the paper-making process. On the other hand, powdery cationic water-soluble polymers are characterized by a few impurities, such as hydrophobic solvents, water, or dispersants, as compared with polymers in other forms. They are advantageous in transport cost and environmental impact, but have a drawback of a few options for improving powdered polymers.

Accordingly, a method of obtaining a powder by performing water-in-oil emulsion polymerization followed by drying is used. Since the water-in-oil emulsion is liquid, the powder can be obtained by spray drying or heat transfer drying. A general method for drying the water-in-oil emulsion is spray drying in terms of production efficiency. Patent Literature 2 describes a spray-dried product of a cationic water-soluble polymer, and Patent Literature 3 illustrates a crosslinked, cationic water-soluble polymer obtained by spray drying and the use thereof as a flocculant. The spray drying process, however, is effective for producing fine powders of 0.1 to 100 µm but fails to produce powders having relatively large particle diameters. Since powders having particle diameters of several hundred to several thousand µm may be preferred depending on the use applications, fine powders obtained by spray drying need to be granulated using a liquid binder or the like. When producing dry powders by the spray drying process, the particle diameter of the dry powders may be affected by changes of the size of a dryer, the temperature of a dryer, supplied air flow, retention time, and the type of a sprayer, or the like. The spray drying has a drawback of complicated setting of drying conditions to obtain powders having a desired particle diameter. In addition, droplets have to be retained during drying and thus a large apparatus is required, which disadvantageously causes a space problem and the like when it is installed.

Patent Literature 4 discloses a method for mixing a strong acid with an emulsion of hydrophobic polymer particles obtained using as a surfactant an alkali metal salt of carboxylic acid to aggregate polymer particles, followed by solid-liquid separation and drying. Patent Literature 5 discloses a method for mixing an aqueous latex of rubber polymer particles (A), an organic solvent (B) that is partially soluble in water, and water (D) to produce an aggregate (F) of the rubber polymer particles (A) containing the organic solvent (B) in an aqueous phase (E), followed by continuous isolation of the aggregate (F). Patent Literature 6 discloses a method for solidifying an aqueous solution of an organic solvent in a latex solution obtained by an emulsion polymerization process, followed by separation and drying to provide a powder. However, the methods in Patent Literatures 4 to 6 are easily applied to hydrophobic polymer emulsions, but it is difficult to apply them to breaking of water-in-oil emulsions of hydrophilic polymers and separation of polymers.

### CITATION LIST

### PATENT LITERATURE

Patent Literature 1: Japanese Patent Application Laid-Open No. Hei. 10-140496
Patent Literature 2: U.S. Patent Application Publication No. 2004-0035317
Patent Literature 3: Japanese Translation of PCT Application Publication No. 2001-516773
Patent Literature 4: Japanese Patent Application Laid-Open No. 2007-302861
Patent Literature 5: Japanese Patent Application Laid-Open No. 2005-248109
Patent Literature 6: Japanese Patent Application Laid-Open No. Hei. 8-073520

### SUMMERY OF INVENTION

### PROBLEMS TO BE SOLVED BY THE INVENTION

Therefore, in order to produce a powdery hydrophilic polymer by drying a hydrophilic polymer comprising a water-in-oil emulsion, it is an object of the present invention to provide a powdery hydrophilic polymer having a relatively large particle diameter, the polymer produced by a method in which drying conditions are easily set and the particle diameter is independent of the drying conditions. It is also another object of the invention to provide a method for producing the same, and a flocculating agent using the same.

### MEANS FOR SOLVING THE PROBLEM

As a result of intensive studies, the present inventors have found that the above-mentioned problems are solved by subjecting a hydrophilic polymer comprising a water-in-oil emulsion in a liquid form to emulsion breaking to cause aggregation followed by grain refining, thereby making it possible to dry the polymer by methods other than spray drying. Specifically, a first aspect of the present invention is a powdery hydrophilic polymer obtained by subjecting a hydrophilic polymer comprising a water-in-oil emulsion to emulsion breaking to cause aggregation followed by drying and then grain refining, in a method for producing the powdery hydrophilic polymer by drying the hydrophilic polymer comprising the water-in-oil emulsion.

A second aspect of the present invention is the powdery hydrophilic polymer according to the first aspect, wherein an emulsion breaker is added to the water-in-oil emulsion to perform the emulsion breaking.

A third aspect of the present invention is the powdery hydrophilic polymer according to the second aspect, wherein the emulsion breaker is at least one selected from an ionic surfactant, a nonionic surfactant having an HLB value of 11 to 20, and an oil-soluble polymer compound having a hydrophilic group and a hydrophobic group.

A fourth aspect of the present invention is the powdery hydrophilic polymer according to the first aspect, wherein the emulsion breaking is performed by applying mechanical shear.

A fifth aspect of the present invention is the powdery hydrophilic polymer according to any one of the first to fourth aspects, wherein the emulsion breaker and the mechanical shear are used in combination for the emulsion breaking.

A sixth aspect of the present invention is the powdery hydrophilic polymer according to any one of the first to fourth aspects, wherein the emulsion breaking involves heating.

A seventh aspect of the present invention is the powdery hydrophilic polymer according to any one of the first to sixth aspects, wherein crushing and granulation are performed before drying.

An eighth aspect of the present invention is the powdery hydrophilic polymer according to the first aspect, wherein the hydrophilic polymer comprising the water-in-oil emulsion has at least one selected from the structural units represented by the following general formulas (1), (2), (3), (4), and (5): 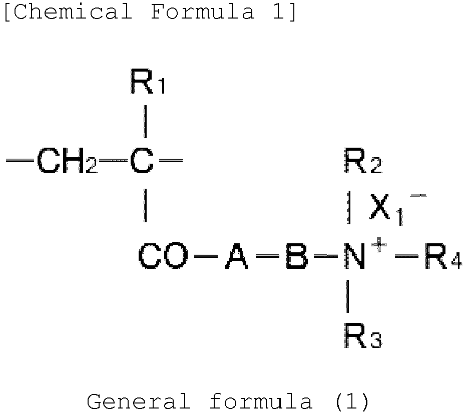 wherein, R₁ represents hydrogen or a methyl group, R₂ and R₃ each represent an alkyl group having 1 to 3 carbon atoms or an alkoxy group, R₄ represents hydrogen, an alkyl group having 1 to 3 carbon atoms, an alkoxy group, an alkyl group having 7 to 20 carbon atoms or an aryl group, and they may be the same or different, A represents O or NH, and B represents an alkylene group or alkoxylene group having 2 to 4 carbon atoms, and X₁⁻ represents an anion; 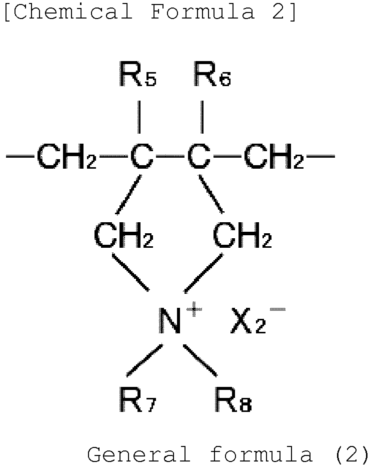 wherein, R₅ and R₆ each represent hydrogen or a methyl group, R₇ and R₈ each represent an alkyl group having 1 to 3 carbon atoms, an alkoxy group or a benzyl group, and X₂⁻ represents an anion; 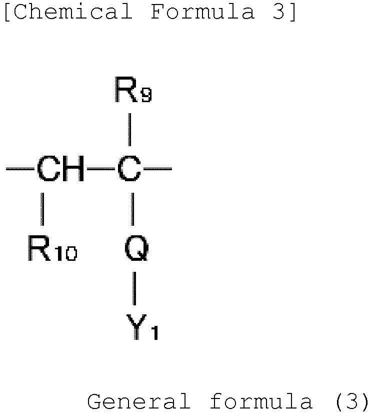 wherein, R₉ represents hydrogen or CH₂COOY₂, R₁₀ represents hydrogen, a methyl group or COOY₂, Q represents SO₃⁻, C₆H₄SO₃⁻, CONHC(CH₃)₂CH₂SO₃⁻, C₆H₄COO⁻ or COO⁻, and Y₁ and Y₂ each represent hydrogen or a cation; 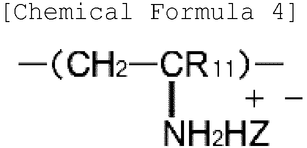 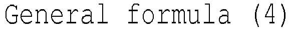 wherein, R₁₁ represents hydrogen or a methyl group, and H⁺Z⁻ represents an inorganic acid and/or an organic acid, and H⁺Z⁻ = 0 when unneutralized; 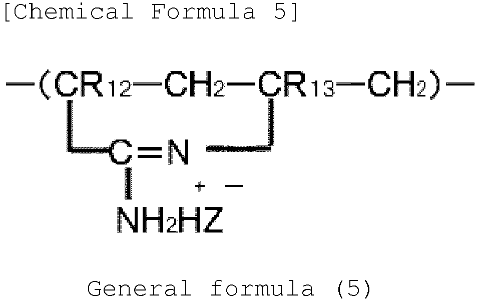 wherein, R₁₂ and R₁₃ represent hydrogen or a methyl group, and H⁺Z⁻ represents an inorganic acid and/or an organic acid, and H⁺Z⁻ = 0 when unneutralized.

A ninth aspect of the present invention is the powdery hydrophilic polymer according to the first or eighth aspect, wherein the hydrophilic polymer comprising the water-in-oil emulsion contains 80 to 100 mol % of the structural unit represented by the above general formula (1) or (2) and 0 to 20 mol % of the structural unit represented by the general formula (3).

A tenth aspect of the present invention is the powdery hydrophilic polymer according to the first, eighth, or ninth aspect, wherein the hydrophilic polymer comprising the water-in-oil emulsion is obtained by polymerization in the presence of a crosslinkable monomer.

An eleventh aspect of the present invention is the powdery hydrophilic polymer according to any of the first to seventh aspects, wherein the hydrophilic polymer comprises a mixture of the following hydrophilic polymers (A) and (B):
Hydrophilic polymer (A);
   including 80 to 100 mol % of the structural unit represented by the following general formula (6), 0 to 20 mol % of the structural unit represented by the above general formula (3), and 0 to 20 mol % of a nonionic monomer structural unit, and obtained by polymerization with addition of 20 to 300 ppm by mass of a crosslinkable monomer based on monomers or a monomer mixture corresponding to the above structural units in the polymerization.
Hydrophilic polymer (B);
   obtained by polymerization of a monomer mixture including 80 to 100 mol % of the structural unit represented by the following general formula (7) or the above general formula (2), 0 to 20 mol % of the structural unit represented by the above general formula (3), and 0 to 20 mol % of a nonionic monomer structural unit, 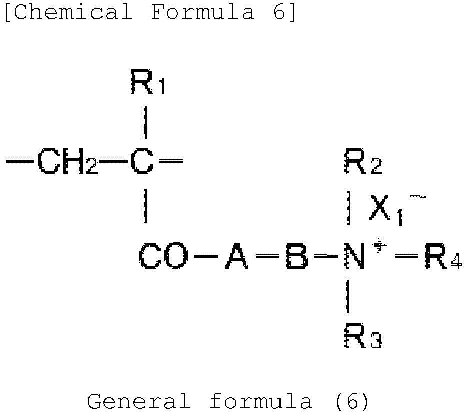
wherein, R₁ represents hydrogen or a methyl group, R₂ and R₃ each represent an alkyl group having 1 to 3 carbon atoms or an alkoxy group, and R₄ represents an alkyl group having 7 to 20 carbon atoms or an aryl group, A represents O or NH, and B represents an alkylene group having 2 to 4 carbon atoms or an alkoxylene group, and X₁⁻ represents an anion, 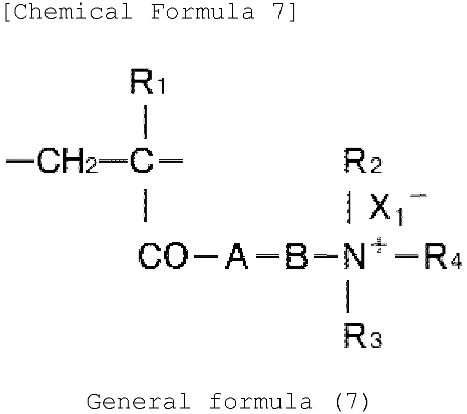 wherein, R₁ represents hydrogen or a methyl group, R₂ and R₃ each represent an alkyl group having 1 to 3 carbon atoms or an alkoxy group, and R₄ represents hydrogen, an alkyl group having 1 to 3 carbon atoms or an alkoxy group, A represents O or NH, and B represents an alkylene group having 2 to 4 carbon atoms or an alkoxylene group, and X₁⁻ represents an anion.

A twelfth aspect of the present invention is the powdery hydrophilic polymer according to any one of the first to seventh and eleventh aspects, wherein the powdery hydrophilic polymer comprises a mixture of the following hydrophilic polymers (A) and (C) :
Hydrophilic polymer (A);
   including 80 to 100 mol % of the structural unit represented by the above general formula (6), 0 to 20 mol % of the structural unit represented by the above general formula (3), and 0 to 20 mol % of a nonionic monomer structural unit, and obtained by polymerization with addition of 20 to 300 ppm by mass of a crosslinkable monomer based on monomers or a monomer mixture corresponding to the above structural units in the polymerization;
Hydrophilic polymer (C);
   including 80 to 100 mol % of the structural unit represented by the above general formula (7) or (2), 0 to 20 mol % of the structural unit represented by the above general formula (3), and 0 to 20 mol % of a nonionic monomer structural unit, and obtained by polymerization with addition of 20 to 300 ppm by mass of a crosslinkable monomer based on monomers or a monomer mixture corresponding to the above structural units in the polymerization.

A thirteenth aspect of the present invention is the powdery hydrophilic polymer according to any of the first to twelfth aspects, wherein the average particle diameter thereof falls within a range of 0.3 to 5 mm.

A fourteenth aspect of the present invention is a method for producing a powdery hydrophilic polymer, subjecting a hydrophilic polymer comprising a water-in-oil emulsion to emulsion breaking to cause aggregation followed by drying and then grain refining.

A fifteenth aspect of the present invention is a flocculating agent including the powdery hydrophilic polymer according to any of the first to thirteenth aspects.

A sixteenth aspect of the present invention is a retention aid or a drainage aid including the powdery hydrophilic polymer according to any of the first to thirteenth aspects.

A seventeenth aspect of the present invention is a paper strengthening agent comprising the powdery hydrophilic polymer according to any of the first to thirteenth aspects, and at least one selected from a raw starch, a cationized starch, an amphoteric starch, and a modified starch.

### BEST MODE FOR CARRYING OUT THE INVENTION

The powdery hydrophilic polymer of the present invention is characterized in that a powder having a relatively large average particle diameter can be produced efficiently even from a water-in-oil emulsion hydrophilic polymer in a liquid form without requiring granulation after drying. Specifically, the present invention is characterized in that a hydrophilic polymer comprising a water-in-oil emulsion is subjected to emulsion breaking to cause aggregation followed by drying and then grain refining. Emulsion breakers are substances that change emulsification balance by addition of a surfactant to cause emulsion breaking. Surfactants are used as the emulsion breakers, and ionic surfactants or nonionic surfactants having an HLB value of 11 to 20 can be used.

Oil-soluble polymer compounds having a hydrophilic group and a hydrophobic group can also be used and those substantially soluble in an oil phase which is a continuous phase of a W/O emulsion are preferred. This principle is that when these compounds are added to a W/O emulsion, the hydrophilic group adsorbs to the surface of aqueous phase particles to eliminate an emulsifier on the interface and destabilize the emulsified state, thereby breaking the emulsified state. Specific examples of such compounds may include copolymers of dimethylaminopropyl (meth) acrylamide, which is a dialkylaminoalkyl acrylamide, or dimethylaminoethyl methacrylate, which is a dialkylaminoalkyl (meth)acrylate, and 2-ethylhexyl acrylate or others, and copolymers of acrylic acid and lauryl acrylate or stearyl acrylate.

Furthermore, in the system with an unstable emulsified state, only application of mechanical shear can cause emulsion breaking. Examples of means of applying mechanical shear may include methods of using homogenizers or mixers. Furthermore, addition of the emulsion breaker and subsequent application of mechanical shear can cause emulsion breaking in a short time. Alternatively, heating also can cause emulsion breaking. A higher heating temperature causes emulsion breaking in a shorter time. When the heating temperature is too high, however, the problem in that a contained hydrophilic polymer deteriorates also arises. Accordingly, the heating temperature is 50 to 150 °C, and preferably 70 to 120 °C.

Conventional spray drying processes are effective for producing fine powders of 0.1 to 100 µm but fail to produce powders having relatively large particle diameters. In contrast, the powdery hydrophilic polymer of the present invention having a powder of 0.3 to 5 mm can be produced and it is very convenient to handle because the powder which is introduced into dissolving water does not easily float and adhere to the wall surface of a dissolving tank. The powdery hydrophilic polymer of the present invention is suitable for practical use because polymers of dimethylaminoethyl (meth)acrylate or quaternary ammonium salts thereof, copolymers thereof with acrylamide, or the like, which are often used in flocculating agents, additives for paper-making, or dispersants, can be used in this powderization method.

The present invention will be described below. The hydrophilic polymer comprising the water-in-oil emulsion is aggregated by emulsion breaking. The emulsion breaking used herein means change of W/O emulsified state and includes breakage of the emulsified state and phase inversion to a W/O emulsified state. The aggregated state means a solidified state of a liquefied substance and more specifically refers to a solid state where aggregates are never joined together into a single mass even after mixing and kneading with each other. The emulsion breaking causes aggregation because aqueous phase particles including a high level of hydrophilic polymer are joined together to produce a coarse gel.

As a method for causing emulsion breaking, known methods can be used. Particularly effective is a method for breaking an emulsion by adding an emulsion breaker and/or applying mechanical shear. Further heating can cause emulsion breaking more effectively. The emulsion breaker used herein refers to a substance that causes emulsion breaking as described above. The emulsion breaking can be caused by increasing HLB balance in the W/O emulsion system or deactivating or eliminating an emulsifier that stabilizes the emulsion.

First, a method of emulsion breaking with an emulsion breaker will be described. In one of methods of emulsion breaking, a surfactant is added to change emulsification balance, causing emulsion breaking. As a surfactant, ionic surfactants or nonionic surfactants having an HLB value of 11 to 20 are used. Examples of the nonionic surfactants may include polyoxyethylene, polyoxyethylene alkyl ether, polyoxyethylene alkyl phenyl ether, polyoxyethylene polypropylene alkyl ether, and alkylamine.

Examples of the ionic surfactants may include anionic surfactants such as alkyl sulfonates, alkylbenzene sulfonates, and alkyl ether carboxylates; and cationic surfactants such as alkyl ammonium salts, alkyl trimethylammonium salts, and alkyl pyridinium salts.

Next, a method for causing emulsion breaking with a polymer compound having a hydrophilic group and a hydrophobic group will be described. It is preferred that the polymer compound having a hydrophilic group and a hydrophobic group be substantially soluble in an oil phase which is a continuous phase of a W/O emulsion. When the polymer compound having a hydrophilic group and a hydrophobic group is added to a W/O emulsion, the hydrophilic group adsorbs to the surface of aqueous phase particles to eliminate an emulsifier on the interface and destabilize the emulsified state, thereby breaking the emulsified state. The polymer compound having a hydrophilic group and a hydrophobic group can be obtained by copolymerization of a monomer having a hydrophilic group and a monomer having a hydrophobic group.

Examples of the monomers having a hydrophilic group may include methoxy or phenoxy polyethylene glycol (degree of polymerization of polyoxyethylene, hereinafter expressed as n, = 4, 9, or 23) (meth)acrylate, polyethylene glycol (n = 4, 9, or 23) mono(meth)acrylate, polyethylene glycol mono(meth)allyl ether, and methoxy polyethylene glycol monoallyl ether. Ionic monomers are more preferred and examples thereof may include dimethylaminopropyl (meth)acrylamide, which is a dialkylaminoalkyl acrylamide, or dimethylaminoethyl (meth)acrylate, which is a dialkylaminoalkyl (meth)acrylate, (meth)acrylic acid, itaconic acid, fumaric acid, maleic acid, vinylsulfonic acid, (meth)allylsulfonic acid, sulfoethyl (meth)acrylate, styrene sulfonic acid, and acrylamide-2-methylpropanesulfonic acid. A preferred monomer having a hydrophilic group is dialkylaminoalkyl (meth)acrylate, and a particularly preferred monomer is dimethylaminoethyl methacrylate.

Examples of the monomers having a hydrophobic group may include monomers having an aromatic ring or aromatic ring with an alkyl group, such as styrene and α-methylstyrene, and aromatic or aliphatic vinyl compounds having 6 to 20 carbon atoms, such as α-olefin. Alkyl (meth)acrylates having an alkyl group with 4 to 18 carbon atoms can also be used. Examples of the preferred monomers having a hydrophobic group may include butyl acrylate, 2-ethylhexyl acrylate, lauryl acrylate, stearyl acrylate, butyl methacrylate, 2-ethylhexyl methacrylate, lauryl methacrylate, and stearyl methacrylate. Accordingly, examples of the preferred copolymers of the monomer having a hydrophilic group and the monomer having a hydrophobic group may include copolymers of dimethylaminoethyl methacrylate with butyl acrylate, 2-ethylhexyl acrylate, lauryl acrylate, stearyl acrylate, butyl methacrylate, 2-ethylhexyl methacrylate, lauryl methacrylate, stearyl methacrylate or the like.

When the ratio of the hydrophilic monomer is too large, the copolymer is insoluble in an oil phase; when the ratio of the hydrophobic monomer is too large, the copolymer has a weak function as an emulsion breaker. The ratio of the hydrophilic monomer to the hydrophobic monomer is 90:10 to 30:70, and preferably 70:30 to 40:60 by molar ratio. The average molecular weight of the polymer having a hydrophilic group and a hydrophobic group according to GPC measurement is 5,000 to 100,000, and preferably 10,000 to 50,000.

The polymer compound having a hydrophilic group and a hydrophobic group of the present invention is preferably produced by solution polymerization in the same hydrocarbon solvent as that used for the water-in-oil polymer emulsion to be described below. The same hydrocarbon solvent as that used for the water-in-oil polymer emulsion is used to provide good workability when the polymer compound is used as an emulsifier in the producing of the water-in-oil polymer emulsion. Polymerization is performed at a monomer concentration of 20 to 80%, and preferably 40 to 60%. The polymerization temperature is in the range of 30 to 180 °C, and preferably 40 to 150 °C. To initiate the polymerization, an oil-soluble radical polymerization initiator is used. Any of azo initiators, peroxide initiators, and redox initiators can be used for the polymerization, among which azo initiators are preferred. Examples of the oil-soluble azo initiators may include
2,2'-azobisisobutyronitrile,
1,1'-azobis(cyclohexanecarbonitrile),
2,2'-azobis(2-methylbutyronitrile),
2,2'-azobis(2-methylpropionate), and
4,4-azobis(4-methoxy-2,4-dimethyl) valeronitrile.

The amount of the emulsion breaker added is not particularly specified but a smaller addition takes too long time to cause emulsion breaking. Since the emulsion breaker remains as an impurity after drying, too much addition is also not preferred. Accordingly, the amount of the emulsion breaker added is 0.1% to 10% by mass, and preferably 0.5% to 3% by mass based on the amount of the water-in-oil emulsion.

In the system with an unstable emulsified state, only application of mechanical shear can cause emulsion breaking. Examples of means of applying mechanical shear may include methods of using homogenizers or mixers. Furthermore, addition of the emulsion breaker and subsequent application of mechanical shear can cause emulsion breaking in a short time.

Moreover, heating can cause emulsion breaking effectively. A higher heating temperature causes emulsion breaking in a shorter time. When the heating temperature is too high, however, the problem in that a contained hydrophilic polymer deteriorates also arises. Accordingly, the heating temperature is 50 to 150 °C, and preferably 70 to 120 °C.

A timing for causing the emulsion breaking may be during water-in-oil emulsion polymerization of the hydrophilic polymer, or at the time of completing the polymerization of 99% or more of the monomers, or at any time while the hydrophilic polymer is present in the aqueous phase of the water-in-oil emulsion without fully completing the polymerization reaction at a rate of polymerization of about 10% to 50%.

The particle diameter can be controlled either before or after drying. When controlling the particle diameter before drying, a method is not particularly limited and a tool for granulating a hydrous gel, such as cutters, meat choppers, and extrusion molding machines, is employed. The aggregate of the hydrophilic polymer including the water-in-oil emulsion is crushed and granulated into the appropriate size according to the drying method. Granulation before drying allows more efficient drying than the case of a coarse aggregate. The granulated material having an average particle diameter of less than 0.5 mm before drying is not efficient because a large load is placed on a granulating machine during the granulation. When the particle diameter of the granulated material exceeds 20 mm, it is difficult to dry the inside of the granulated material well in drying. The average particle diameter of the granulated material before drying is 0.5 to 20 mm, and preferably 1.0 to 10 mm.

There is no particular limitation on the drying method after the granulation, and methods such as hot-air drying, conductive heat transfer drying, and radiant heat drying can be used. In particular, hot-air drying with good drying efficiency, such as fluidized drying and through-flow drying, is preferred. The dried solid material is processed with a crusher or the like after drying to provide not only relatively large particles but also fine particles having average particle diameters of micrometer order.

The powdery hydrophilic polymer of the present invention can be produced by drying the hydrophilic polymer including the water-in-oil emulsion, the hydrophilic polymer obtained by emulsification with a surfactant so that a water-immiscible organic liquid is a continuous phase and an aqueous solution mixture of monomers having an unsaturated double bond (s) is a dispersed phase, followed by polymerization. Examples of the monomer for polymerizing the structural unit represented by the general formula (1) as the structure of the hydrophilic polymer may include dimethylaminoethyl (meth)acrylate, diethylaminoethyl (meth)acrylate, dimethylaminopropyl (meth)acrylamide, diethylaminopropyl (meth) acrylamide; salts thereof neutralized by hydrogen halides, sulfuric acid, nitric acid, an organic acid, and others; and substances quaternized by alkyl halides, benzyl halide, dimethyl sulfate, diethyl sulfate, and others. Examples of the monomer for polymerizing the structural unit represented by the general formula (2) may include dimethyldi(meth)allyl ammonium chloride and di(meth)allyl methylbenzyl ammonium chloride.

Examples of the monomer for polymerizing the structural unit represented by the general formula (3) may include vinylsulfonic acid, vinylbenzene sulfonic acid, 2-acrylamide-2-methylpropanesulfonic acid, methacrylic acid, acrylic acid, itaconic acid, maleic acid, and p-carboxystyrene.

The structural unit represented by the general formula (4) is obtained by hydrolyzing N-vinyl carboxylic acid amides. Examples of the N-vinyl carboxylic acid amides may include N-vinylformamide and N-vinylacetamide. The structural unit represented by the general formula (5) can be obtained by copolymerizing acrylonitrile and N-vinyl carboxylic acid amides so that an adjacent nitrile group and amino group are reacted in hydrolysis by an acid.

In the polymerization to form the hydrophilic polymer having the structural unit represented by the general formula (1), the structural unit represented by the general formula (2), or the structural unit represented by the general formula (3), a nonionic monomer may be copolymerized therewith. Examples of the nonionic monomer may include acrylamide, N,N-dimethylacrylamide, vinyl acetate, acrylonitrile, methyl acrylate, 2-hydroxyethyl (meth)acrylate, diacetone acrylamide, N-vinylpyrrolidone, N-vinylformamide, N-vinylacetamide, and acryloyl morpholine.

In the polymerization to form the hydrophilic polymer having the structural unit represented by the general formula (4) or (5), a hydrolysis process is involved in addition to the polymerization and thus a nonionic monomer having hydrolysis resistance is preferably copolymerized therewith.

The water-soluble hydrophilic polymer includes at least one of the structural units represented by the general formulas (1), (2), (3), (4), and (5). The ratio of the structural units represented by the general formulas (1), (2), (3), (4), and (5) included in the polymer is 1 to 100 mol %. The hydrophilic polymer having the structural unit of the general formula (1) or (2) and a nonionic structural unit is a cationic polymer, and may be water-soluble, water-soluble crosslinkable, water-swellable, or water-dispersible. For the water-swellable polymer, a crosslikable monomer and a water-soluble monomer are copolymerized in polymerization so that the crosslikable monomer is present in the polymerization to such an extent to swell in water without dissolving in water. The cationic water-soluble polymer has 1 to 100 mol % of the structural unit of the general formula (1) or (2) and 0 to 99 mol % of a nonionic structural unit, and preferably has 10 to 100 mol % of the structural unit of the general formula (1) or (2) and 0 to 90 mol % of a nonionic structural unit. The hydrophilic polymer having the structural units of the general formula (1) or (2) and the general formula (3) and a nonionic structural unit is an amphoteric polymer, and may be water-soluble, water-soluble crosslinkable, water-swellable, or water-dispersible. The amphoteric water soluble polymer has 1 to 95 mol % of the structural unit of the general formula (1) or (2), 5 to 50 mol % of the structural unit of the general formula (3), and 0 to 94 mol % of a nonionic structural unit, and preferably has 10 to 95 mol % of the structural unit of the general formula (1) or (2), 5 to 30 mol % of the structural unit of the general formula (3), and 0 to 85 mol % of a nonionic structural unit.

The hydrophilic polymer having the structural unit of the general formula (4) and a nonionic structural unit is a cationic polymer, and may be water-soluble, water-soluble crosslinkable, water-swellable, or water-dispersible. The cationic water-soluble polymer has 1 to 100 mol % of the structural unit of the general formula (4) and 0 to 99 mol % of a nonionic structural unit, and preferably has 10 to 100 mol % of the structural unit of the general formula (4) and 0 to 90 mol % of a nonionic structural unit. The hydrophilic polymer having the structural unit of the general formula (4), the structural unit of the general formula (5), and a nonionic structural unit is a cationic polymer, and may be water-soluble, water-soluble crosslinkable, water-swellable, or water-dispersible.

The cationic water-soluble polymer preferably has 1 to 50 mol % of the structural unit of the general formula (4), 10 to 99 mol % of the structural unit of the general formula (5), and 1 to 89 mol % of a nonionic structural unit, and more preferably has 1 to 30 mol % of the structural unit of the general formula (4), 30 to 99 mol % of the structural unit of the general formula (5), and 1 to 69 mol % of a nonionic structural unit.

The powdery hydrophilic polymer produced by the present invention can be used for applications such as flocculating agents for sludge dewatering, additives for paper-making, cosmetics, and COD removers. The molecular weight can be appropriately adjusted depending on applications to synthesize desired products. Paper strengthening agents, which are additives for paper-making, have a weight average molecular weight of 500, 000 to 3, 000, 000, drainage aids or retention aids have a weight average molecular weight of 5,000,000 to 30,000,000, and flocculating agents for sludge dewatering have a weight average molecular weight of 3,000,000 to 10,000,000.

The water-swellable polymer can be obtained as a water-insoluble swellable gel by copolymerizing a crosslikable monomer and a water-soluble monomer in polymerization so that the crosslikable monomer is present in the polymerization to such an extent to swell in water without dissolving in water. The crosslinkable water-soluble polymer can be similarly obtained by copolymerizing a water-soluble amount of crosslikable monomer and a water-soluble monomer in polymerization. Examples of crosslinking agents may include N,N-methylenebis(meth)acrylamide, triallylamine, tetraallyl ammonium chloride, ethylene glycol dimethacrylate, diethylene glycol dimethacrylate, triethyleneglycol dimethacrylate, tetraethylene glycol dimethacrylate, 1,3-butylene glycol dimethacrylate, polyethylene glycol di(meth)acrylate, N-vinyl(meth)acrylamide, N-methylallylacrylamide, glycidyl acrylate, polyethylene glycol diglycidyl ether, acrolein, glyoxal, and vinyltrimetoxysilane. As crosslinking agents in this case, water-soluble polyvinyl compounds are more preferred and N,N-methylenebis(meth)acrylamide is most preferred. The amount of the crosslinking agent is at least 1 ppm or more, and preferably 5 to 1000 ppm by mass based on the monomers to be polymerized.

The combination use with a chain transfer agent, such as sodium formate, isopropyl alcohol, and sodium methallylsulfonate is also effective as a procedure of adjusting the crosslinkability. The amount of the chain transfer agent added is 10 to 10,000 ppm, and preferably 100 to 1,000 ppm by mass based on the total amount of the monomers.

The water-soluble polymer having a composition with the same structural units can be made into a water-dispersible hydrophilic polymer when a hydrophobic monomer is copolymerized. Examples of the hydrophobic monomers may include styrene and (meth)acrylate. The ratio of the structural unit of the hydrophobic monomer contained in the water-dispersible hydrophilic polymer is 10 to 50 mol %.

Powdery hydrophilic polymers having particle diameters as small as 0.3 mm or less easily float on a dissolving water when introduced thereto and may adhere to the wall surface of a dissolving tank. In addition, dust powders spread in the air or so, which worsens a working environment. Powdery hydrophilic polymers having particle diameters of more than 5 mm result in lower solubility so that they take a long time to dissolve or generate undissolved matters or so. Accordingly, the average particle diameter of the powdery hydrophilic polymer is preferably 0.3 to 5 mm, more preferably 0.5 to 2 mm.

For the powdery hydrophilic polymer of the present invention, aggregation of the water-in-oil emulsion is caused by the emulsion breaker, mechanical shear, or heating, followed by crushing with a cutter or the like, or granulation with a meat chopper or the like, thereby allowing efficient drying. After the aggregation, the aggregate is pressed or squeezed to separate an oil which is a dispersion medium in the water-in-oil emulsion, so that drying load is reduced and oil collection is easily performed. If the dispersion medium is squeezed out and then the granulation is improved or the aggregate is finely granulated in a meat chopper, there may be no need of grain refining such as pulverizing after drying in some cases. These processes can be combined in an appropriate order considering the cost and efficiency.

The use of the powdery hydrophilic polymer of the present invention as a flocculating agent will be described. Conventionally, cationic or amphoteric polymer flocculants have been widely used for dewatering sewage, nightsoil, and organic sludge generated in factories such as food factories. In particular, (meth)acrylic cationic or amphoteric polymers have been widely used. The powdery hydrophilic polymer of the present invention for use in a flocculating agent has 20 to 100 mol % of the structural unit represented by the general formula (1) or (2) and 0 to 20 mol % of the structural unit represented by the general formula (3), and preferably has 40 to 100 mol % of the structural unit represented by the general formula (1) or (2). In recent years, water-soluble polymers that are crosslinked or branched have been considered effective. Depending on the target sludge, the performance of the powdery hydrophilic polymer of the present invention may be increased by the presence of a crosslikable monomer in the polymerization. The amount of the crosslinking agent is preferably 5 to 1000 ppm by mass based on the monomers to be polymerized. The powdery hydrophilic polymer of the present invention is added to sludge followed by stirring to form firm flocks by flocking, thereby exhibiting effects of increasing the amount of sludge to be treated and decreasing the water content of a dewatered cake.

Polyamidine water-soluble polymers are considered to have a characteristic of the ability to insolubilize/aggregate decomposed organic substances which are generated during the microbial treatment of mixed raw sludge of sewage, excess sludge of the same, excess sludge of wastewater from food processing and fish processing, or the like. However, it has been conventionally difficult to achieve these processes by the treatment with the (meth) acrylic cationic or amphoteric polymers. One of the reasons is that the (meth)acrylic cationic or amphoteric polymers, which have very high molecular weights, have been suitable for producing large flocks with high strength by the crosslinking adsorbing action but have had low functions of neutralization of surface charge or nonionic insolubilization, which is not always accompanied by neutralization of surface charge, of the sludge with high hydrophilicity generated during the microbial treatment.

The reason why the dewaterbility is improved by using the powdery hydrophilic polymer of the present invention is considered to be that the water-in-oil polymer emulsion is allowed to have a crosslinked structure different from conventional ones so that the powdery polymer which is obtained by aggregation by emulsion breaking and subsequent grain refining after drying can exert a good cohesive force on less-cohesive sludge. This is considered to be affected by the molecular weight, cation equivalent, hydrophilic/hydrophobic balance, and others. In the present invention, these factors would be controlled by adjusting the molecular weight, making the polymer high cationic, and producing a crosslinkable polymer by addition of the crosslinking agent for hydrophobization. With regard to the molecular weight for use in the flocculating agent, the weight average molecular weight preferably falls within the range of 3,000,000 to 10,000,000.

The powdery hydrophilic polymer of the present invention for use in the flocculating agent particularly for hardly-dewatered sludge low in fiber content preferably has 80 to 100 mol % of the structural unit represented by the general formula (1) or (2) and 0 to 20 mol % of the structural unit represented by the general formula (3). Furthermore, the hydrophilic polymer preferably includes a mixture of the following hydrophilic polymers (A) and (B) or a mixture of the following hydrophilic polymers (A) and (C).
Hydrophilic polymer (A);
   including 80 to 100 mol % of the above structural unit represented by the general formula (6), 0 to 20 mol % of the structural unit represented by the above general formula (3), and 0 to 20 mol % of a nonionic monomer structural unit, and obtained by polymerization with addition of 20 to 300 ppm by mass of a crosslikable monomer based on monomers or a monomer mixture corresponding to the above structural units in the polymerization.
Hydrophilic polymer (B);
   obtained by polymerization of a monomer mixture including 80 to 100 mol % of the structural unit represented by the above general formula (7) or (2), 0 to 20 mol % of the structural unit represented by the above general formula (3), and 0 to 20 mol % of a nonionic monomer structural unit.
Hydrophilic polymer (C);
   including 80 to 100 mol % of the structural unit represented by the above general formula (7), 0 to 20 mol % of the structural unit represented by the above general formula (3), and 0 to 20 mol % of a nonionic monomer structural unit, and obtained by polymerization with addition of 20 to 300 ppm by mass of a crosslikable monomer based on monomers or a monomer mixture corresponding to the above structural units in the polymerization.

The powdery hydrophilic polymer of the present invention for use in the flocculating agent particularly for hardly-dewatered sludge low in fiber content may be a mixture of the hydrophilic polymer having the structural unit of the general formula (4) and a nonionic structural unit and the hydrophilic polymer (A) or (C), or may be a mixture of the hydrophilic polymer having the structural unit of the general formula (5) and a nonionic structural unit and the hydrophilic polymer (A) or (C).

The powdery hydrophilic polymer of the present invention is usually added to organic sludge (so-called raw sludge, excess sludge, mixed raw sludge, digested sludge, precipitated/floating sludge, and mixtures thereof) generated in the treatment of sewage, nightsoil, industrial wastewater usually at 0.2 to 2.0 % by mass based on the sludge solid content, and added in the form of a 0.05 to 0.5 % by mass aqueous solution in consideration of the amount and viscosity of the solution at the time of addition. Although the target sludge is not particularly limited, the powdery hydrophilic polymer of the present invention is particularly effective and preferable for sludge low in fiber content, sludge high in organic content (VSS/SS), and sludge high in degree of decomposition.

The powdery hydrophilic polymer of the present invention may be used singly for sludge dewatering and can be more preferably used in combination with an inorganic flocculant such as iron salts and aluminum salts in terms of dewatering effects. Examples of the inorganic flocculants may include iron chloride, iron sulfide, poly iron, PAC, and aluminum sulfide. The amount of the inorganic flocculant added to sludge is usually 0.1% to 2% by mass, and preferably 0.3% to 1.0% by mass based on the sludge solid content.

The types of dewaterers to be used include belt press type, centrifugal dewaterers, screw press type, multiple disc type dewaterers, and rotary press type.

The use of the powdery hydrophilic polymer of the present invention as an additive for paper-making will be described. In general, (meth)acrylic cationic polymers are widely used as a so-called retention aid, which is added for improving the retention of paper-making materials in the wire section of the paper-making process. A relatively low mole percent, i.e., 10 to 30 mol %, of cations are used. This is because the cohesive force due to the high molecular weight is required to improve the retention and a lower mole percent of cations tend to provide a polymer with higher molecular weight. The powdery hydrophilic polymer of the present invention for use in the retention aid has 5 to 50 mol % of the structural unit represented by the general formula (1) or (2) and 0 to 20 mol % of the structural unit represented by the general formula (3), and more preferably has 10 to 40 mol % of the structural unit represented by the general formula (1) or (2). The weight average molecular weight preferably falls within the range of 5,000,000 to 30,000,000, more preferably 10,000,000 to 30,000,000. The powdery hydrophilic polymer of the present invention and other additives for paper-making can be added in combination. Specifically, anionic or amphoteric polymers, or inorganic substances, such as bentonite or colloidal silica, can be appropriately added. With regard to the timing, they are added at the same time with or after the addition of the powdery hydrophilic polymer of the present invention. Furthermore, they can be added at the same time with other chemicals than the retention aid formulation, for example, fillers, paper strengthening agents, sizing agents, coagulants, and aluminum sulfide. The target pulps include various pulps, such as newspaper, fine paper, PPC paper, coated base paper, fine coated paper, and paperboard.

As a drainage aid which is mainly for improving drainage of water from paper-making materials in the wire section of the paper-making process, (meth)acrylic cationic polymers are widely used in general and usually contain low, middle to high moles, i.e., 20 to 80 mol %, of cations. The powdery hydrophilic polymer of the present invention for use in the drainage aid has 10 to 80 mol % of the structural unit represented by the general formula (1) or (2) and 0 to 20 mol % of the structural unit represented by the general formula (3), and more preferably has 20 to 80 mol % of the structural unit represented by the general formula (1) or (2). The weight average molecular weight preferably falls within the range of 5,000,000 to 30,000,000, more preferably 8,000,000 to 30,000,000. The powdery hydrophilic polymer of the present invention can obtain effects not only of improving drainage of water from paper-making material in the wire section, but also of improving dewaterability in the press section and drying efficiency in the drying section. The powdery hydrophilic polymer of the present invention and other additives for paper-making can be added in combination. Specifically, anionic or amphoteric polymers, or inorganic substances, such as bentonite or colloidal silica, can be appropriately added. With regard to the timing, they are added at the same time with or after the addition of the powdery hydrophilic polymer of the present invention. Furthermore, they can be added at the same time with other chemicals than the drainage aid formulation, for example, fillers, paper strengthening agents, sizing agents, coagulants, and aluminum sulfide. The target pulps include various pulps but the effect is more exerted particularly for paperboard which requires improvement in drainage, dewaterability, and production efficiency with the minimum additive rate.

Although there is no particular limitation on the place where the powdery hydrophilic polymer of the present invention is added as the retention aid or drainage aid, it is preferably added before or after a fan pump or screen close to the wire section of a paper-making machine. In particular, the powdery hydrophilic polymer of the present invention is more preferably added to the materials after passing through the screen because the shearing force is not applied to the polymer so that flock formed by aggregation hardly collapse to thereby obtain a high retention effect and drainage/dewaterability improvement effect. Regarding the additive rate, the powdery hydrophilic polymer of the present invention is usually added at 50 to 500 ppm based on the pulp solid content, and preferably added as a 0.05 to 0.2% by mass aqueous solution in consideration of the amount and viscosity of the solution at the time of addition.

As a paper strengthening agent in the paper-making process, (meth) acrylic amphoteric polymers or starches are generally used. As low as 1 to 20 mol% of cations and 1 to 20 mol % of anions are used in the (meth) acrylic amphoteric polymer. This is because the amount more than 20 mol % results in a lower ratio of a nonionic monomer to decrease a paper strengthening effect. As starches, specifically, a potato starch, a glutinous potato starch, a sweet potato starch, a glutinous corn starch, a high amylose corn starch, a wheat starch, a rice starch, a tapioca starch, a sago starch, glucomannan, galactan, and the like are used. In general, the surface of granules of raw starches slightly exhibits anionic due to hydroxyl groups in the molecule. Such raw starches may be used as modified starches into which nonionic functional groups are introduced by modification such as acetylation, hydroxyethylation, and hydroxypropylation to modify film characteristics and viscosity characteristics of starches.

Cationic or amphoteric raw starches may be used in many cases. In this case, starches are used as paste liquids, i.e., used after heating to the gelatinization temperature or higher. The heating temperature is appropriately set according to the type of starch, and often set to 70 °C or higher. The powdery hydrophilic polymer of the present invention for use in the paper strengthening agent may be used singly or may be used in combination with the above starches. In addition, the powdery hydrophilic polymer of the present invention and undissolved starch granules may be mixed and added to paper-making materials. When both are mixed in water before added to paper-making materials, the powdery hydrophilic polymer adsorbs to the surface of starch granules to increase the adhesion to pulp fiber, thereby exerting a high paper strengthening effect. Alternatively, a mixture of the powdery hydrophilic polymer of the present invention and undissolved starch granules may be heated to gelatinize the starch, which is then added to paper-making materials as an aqueous solution.

The powdery hydrophilic polymer of the present invention for use singly or in combination with the starch as the paper strengthening agent has 3 to 20 mol % of the structural unit represented by the general formula (1) or (2) and 2 to 20 mol % of the structural unit represented by the general formula (3), and preferably has 5 to 15 mol % of the structural unit represented by the general formula (1) or (2) and 2 to 15 mol % of the structural unit represented by the general formula (3). The powdery hydrophilic polymer of the present invention when mixed with undissolved starch granules and added to paper-making materials has 20 to 50 mol % of the structural unit represented by the general formula (1) or (2) and 0 to 10 mol % of the structural unit represented by the general formula (3), and more preferably has 20 to 40 mol % of the structural unit represented by the general formula (1) or (2) and 0 to 5 mol % of the structural unit represented by the general formula (3). It is preferred that a crosslikable monomer be contained and the amount of the crosslinking agent be in the range of 5 to 100 ppm by mass based on monomers to be polymerized. The weight average molecular weight of the powdery hydrophilic polymer of the present invention for use in the paper strengthening agent preferably falls within the range of 500,000 to 3,000,000. Furthermore, the powdery hydrophilic polymer of the present invention can be added at the same time with other chemicals than the paper strengthening formulation, for example, fillers, sizing agents, coagulants, and aluminum sulfide. The target pulps include various pulps but the effect is more exerted particularly for paperboards, such as a liner and core base paper, which require a paper strengthening effect.

Although there is no particular limitation on the place where the powdery hydrophilic polymer of the present invention is added as the paper strengthening agent, it may be added to high concentration materials of 1.5% by mass or more in a stuff box, machine chest, mixing chest, or others, or added to low concentration materials of 1.5% by mass or less before or after a fan pump or screen in the paper-making process. The additive rate of the powdery hydrophilic polymer of the present invention is usually 0.01% to 1% by mass based on the pulp solid content. With regard to the concentration at the time of addition, a method for adding as a 0.05% to 1% by mass aqueous solution is preferred in consideration of the amount and viscosity of the solution, and a method for adding as a 0.05% to 0.3% by mass aqueous solution is preferred when mixing with undissolved starch granules. The additive rate of the starch is preferably 0.1 to 5% (based on the pulp solid content).

### DESCRIPTIOIN OF EMBODIMENTS

The present invention will be described below in more detail by way of Examples, but the present invention is not limited to these.

The hydrophilic polymers comprising the water-in-oil emulsion described in the following Table 1 were used to perform the test of aggregation by emulsion breaking and subsequent granulation followed by drying.

**(Table 1)**

| Sample name | Composition, Physical properties |
|---|---|
| Sample A | Acrylamide /Acryloyloxyethyl trimethylammonium chloride copolymer |
| | Mol % ratio of structural units: 90/10, Concentration of hydrophilic polymer: 50%, |
| | Rotational viscosity: 1720 mPa·s |
| Sample B | Acrylamide /Acryloyloxyethyl trimethylammonium chloride copolymer |
| | Mol % ratio of structural units: 80/20, Concentration of hydrophilic polymer: 50%, |
| | Rotational viscosity: 1940 mPa·s |
| Sample C | Acrylamide / Acryloyloxyethyl trimethylammonium chloride / Methylenebisacrylamide copolymer |
| | Mol % ratio of structural units: 70/30, Methylenebisacrylamide: 15 ppm by mass, |
| | Concentration of hydrophilic polymer: 50%, Rotational viscosity: 370 mPa·s |
| Sample D | Acrylamide / Acryloyloxyethyl trimethylammonium chloride / Methylenebisacrylamide copolymer |
| | Mol % ratio of structural units: 50/50, Methylenebisacrylamide: 15 ppm by mass, |
| | Added at polymerization, Concentration of hydrophilic polymer: 50%, Rotational viscosity: 1530 mPa·s |
| Sample E | Acrylamide / Acryloyloxyethyl benzyldimethylammonium chloride / Methylenebisacrylamide copolymer |
| | Mol % ratio of structural units: 5/95, Methylenebisacrylamide: 500 ppm by mass, |
| | Added at polymerization, Concentration of hydrophilic polymer: 50%, Rotational viscosity: 450 mPa·s |
| Sample F | Acrylamide / Sodium acrylate |
| | Mol % ratio of structural units: 50/50, Concentration of hydrophilic polymer: 40%, |
| | Rotational viscosity: 650 mPa·s |
| Sample G | Acryloyloxyethyl trimethylammonium chloride polymer |
| | Mol % ratio of structural unit: 100, Concentration of hydrophilic polymer: 50%, |
| | Rotational viscosity: 370 mPa·s |
| Sample H | Acryloyloxyethyl trimethylammonium chloride / Methylenebisacrylamide copolymer |
| | Mol % ratio of structural unit: 100, Methylenebisacrylamide: 50 ppm by mass, |
| | Added at polymerization, Concentration of hydrophilic polymer: 50%, Rotational viscosity: 340 mPa·s |
| Sample I | Acrylamide / Acryloyloxyethyl trimethylammonium chloride / Sodium acrylate/methylenebisacrylamide copolymer |
| | Mol % ratio of structural units: 85/10/5, Methylenebisacrylamide: 15 ppm by mass, |
| | Added at polymerization, Concentration of hydrophilic polymer: 50%, Rotational viscosity: 440 mPa·s |
| Sample J | Acrylamide / Acryloyloxyethyl trimethylammonium chloride / Sodium acrylate/methylenebisacrylamide copolymer |
| | Mol % ratio of structural units: 85/5/10, Methylenebisacrylamide: 15 ppm by mass, |
| | Added at polymerization, Concentration of hydrophilic polymer: 50%, Rotational viscosity: 340 mPa·s |

### [Example 1]

### (Emulsion Breaking Step 1)

To 100 g of Sample A, 20.0 g of a 30% aqueous solution of cetyltrimethylammonium chloride was added and stirred with a magnetic stirrer to cause aggregation.

### [Example 2]

### (Emulsion Breaking Step 2)

To 100 g of Sample A, 5.0 g of polyoxyethylene (30) octyl phenyl ether (HLB value 20) was added and stirred with a magnetic stirrer to cause aggregation.

### [Example 3]

### (Emulsion Breaking Step 3)

To 100 g of Sample A, 10.0 g of a 50% aqueous solution of sodium dodecylbenzenesulfonate was added and stirred with a magnetic stirrer to cause aggregation.

### [Example 4]

### (Emulsion Breaking Step 4)

To 100 g of Sample A, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

### [Example 5]

### (Emulsion Breaking Step 5)

To 100 g of Sample B, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

### [Example 6]

### (Emulsion Breaking Step 6)

To 100 g of Sample C, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

### [Example 7]

### (Emulsion Breaking Step 7)

To 100 g of Sample D, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

### [Example 8]

### (Emulsion Breaking Step 8)

To 100 g of Sample E, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

### [Example 9]

### (Emulsion Breaking Step 9)

To 100 g of Sample F, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

### [Example 10]

### (Emulsion Breaking Step 10)

To 100 g of Sample G, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

### [Example 11]

### (Emulsion Breaking Step 11)

To 100 g of Sample H, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

### [Example 12]

### (Emulsion Breaking Step 12)

One hundred grams of Sample B was processed with a homogenizer at 12,000 rpm to cause aggregation.

### [Example 13]

### (Emulsion Breaking Step 13)

To 100 g of Sample B, 1.0 g of a copolymer of dimethylaminoethyl methacrylate and 2-ethylhexyl acrylate (copolymerization ratio 50:50 mol %; weight average molecular weight 12, 000) was added and processed with a homogenizer at 12, 000 rpm to cause aggregation.

### [Example 14]

### (Emulsion Breaking Step 14)

To 100 g of Sample B, 1.0 g of a copolymer of dimethylaminoethyl methacrylate and 2-ethylhexyl acrylate (copolymerization ratio 70:30 mol %; weight average molecular weight 12,000) was added and stirred with a magnetic stirrer to cause aggregation.

### [Example 15]

### (Emulsion Breaking Step 15)

To 100 g of Sample B, 10.0 g of a 50% aqueous solution of sodium dodecylbenzenesulfonate was added and stirred with a magnetic stirrer to cause aggregation.

### [Example 16]

### (Emulsion Breaking Step 16)

To a mixture of 50 g of Sample E and 50 g of Sample G, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

### [Example 17]

### (Emulsion Breaking Step 17)

To a mixture of 50 g of Sample E and 50 g of Sample H, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

### [Example 18]

### (Emulsion Breaking Step 18)

To 100 g of Sample I, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

### [Example 19]

### (Emulsion Breaking Step 19)

To 100 g of Sample J, 1.0 g of a copolymer of dimethylaminoethyl methacrylate and 2-ethylhexyl acrylate (copolymerization ratio 50:50 mol %; weight average molecular weight 12,000) was added and stirred with a magnetic stirrer to cause aggregation.

The time until aggregation occurs in the water-in-oil emulsion is shown in Table 2 for the above tests.

**(Table 2)**

| Example no. | Sample name | Emulsion breaker composition and additive rate (based on amount of emulsion) | Emulsion breaking means | Temperature (°C) | Time until emulsion breaking (min) |
|---|---|---|---|---|---|
| Example 1 | Sample A | 20% of 30% aqueous solution of cetyltrimethylammonium chloride | Magnetic stirrer stirring | 25 | 45 |
| Example 2 | Sample A | 5% of polyoxyethylene (30) oleyl phenyl ether | Magnetic stirrer stirring | 25 | 100 |
| Example 3 | Sample A | 5% of sodium dodecylbenzenesulfonate | Magnetic stirrer stirring | 25 | 60 |
| Example 4 | Sample A | 1% of dimethylaminoethyl methacrylate / 2-ethylhexyl acrylate (molar ratio 1:1) copolymer | Magnetic stirrer stirring | 25 | 10 |
| Example 5 | Sample B | 1% of dimethylaminoethyl methacrylate / 2-ethylhexyl acrylate (molar ratio 1:1) copolymer | Magnetic stirrer stirring | 25 | 10 |
| Example 6 | Sample C | 1% of dimethylaminoethyl methacrylate / 2-ethylhexyl acrylate (molar ratio 1:1) copolymer | Magnetic stirrer stirring | 25 | 10 |
| Example 7 | Sample D | 1% of dimethylaminoethyl methacrylate / 2-ethylhexyl acrylate (molar ratio 1:1) copolymer | Magnetic stirrer stirring | 25 | 5 |
| Example 8 | Sample E | 1% of dimethylaminoethyl methacrylate / 2-ethylhexyl acrylate (molar ratio 1:1) copolymer | Magnetic stirrer stirring | 25 | 30 |
| Example 9 | Sample F | 1% of dimethylaminoethyl methacrylate / 2-ethylhexyl acrylate (molar ratio 1:1) copolymer | Magnetic stirrer stirring | 25 | 30 |
| Example 10 | Sample G | 1% of dimethylaminoethyl methacrylate / 2-ethylhexyl acrylate (molar ratio 1:1) copolymer | Magnetic stirrer stirring | 25 | 30 |
| Example 11 | Sample H | 1% of dimethylaminoethyl methacrylate / 2-ethylhexyl acrylate (molar ratio 1:1) copolymer | Magnetic stirrer stirring | 25 | 30 |
| Example 12 | Sample B | None | Homogenizer at 12,000 rpm | 25 | 180 |
| Example 13 | Sample B | 1% of dimethylaminoethyl methacrylate / 2-ethylhexyl acrylate (molar ratio 1:1) copolymer | Homogenizer at 12,000 rpm | 25 | 1 |
| Example 14 | Sample B | 1% of dimethylaminoethyl methacrylate / 2-ethylhexyl acrylate (molar ratio 7:3) copolymer | Magnetic stirrer stirring | 80 | 0.5 |
| Example 15 | Sample B | 5% of sodium dodecylbenzenesulfonate | Magnetic stirrer stirring | 25 | 30 |
| Example 16 | Sample E + G mixture | 1% of dimethylaminoethyl methacrylate / 2-ethylhexyl acrylate (molar ratio 1:1) copolymer | Magnetic stirrer stirring | 25 | 30 |
| Example 17 | Sample E+ H mixture | 1% of dimethylaminoethyl methacrylate / 2-ethylhexyl acrylate (molar ratio 1:1) copolymer | Magnetic stirrer stirring | 25 | 30 |
| Example 18 | Sample I | 1% of dimethylaminoethyl methacrylate / 2-ethylhexyl acrylate (molar ratio 1:1) copolymer | Magnetic stirrer stirring | 25 | 35 |
| Example 19 | Sample J | 1% of dimethylaminoethyl methacrylate / 2-ethylhexyl acrylate (molar ratio 1:1) copolymer | Magnetic stirrer stirring | 25 | 35 |

### [Example 20]

### (Granulation Step)

The aggregates produced in Examples 1 to 19 were supplied to a meat chopper with a dice size of 4.8 mm to produce granulated materials having particle diameters of 4 to 6 mm.

### [Example 21]

### (Drying Step)

The granulated particles were powdered by drying at 105 °C for one hour in a tray-type forced-air dryer. The obtained dry powder was crushed with a screen having a pore size of 2 mm to produce a powdery hydrophilic polymer. The powdery hydrophilic polymers corresponding to Examples 1 to 19 were taken as Specimens 20 to 38. The average particle diameter and the weight average molecular weight by a light scattering method were measured for the obtained powdery hydrophilic polymers. To a 200 mL beaker, pure water and the dry powder were added to make up the total amount of 150 mL with 0.2% of the hydrophilic polymer and stirred with a magnetic stirrer to dissolve. The dissolution state was observed. The obtained results are shown in Tables 3.

### (Comparative Examples 1 to 3)

Samples B, D, and I were dried at 120 °C in a spray dryer. The obtained powdery hydrophilic polymers were taken as Comparative Specimens 1 to 3, respectively. The average particle diameter and the weight average molecular weight by a light scattering method were measured for the obtained dry powders. To a 200 mL beaker, pure water and the dry powder were added to make up the total amount of 150 mL with 0.2% of the hydrophilic polymer and stirred with a magnetic stirrer to dissolve. The dissolution state was observed. The results are shown in Table 3.

**(Table 3)**

| Specimen name | Example no. | Dryer | Drying temperature (°C) | Average particle diameter (mm) | Weight average molecular weight | Dissolusion state |
|---|---|---|---|---|---|---|
| Specimen 20 | Example 1 | Tray-Type Forced-Air Dryer | 105 | 1.4 | 1.05 × 10⁷ | Dissolved |
| Specimen 21 | Example 2 | Tray-Type Forced-Air Dryer | 105 | 1.8 | 1.02 × 10⁷ | Dissolved |
| Specimen 22 | Example 3 | Tray-Type Forced-Air Dryer | 105 | 1.4 | 1.06 × 10⁷ | Dissolved |
| Specimen 23 | Example 4 | Tray-Type Forced-Air Dryer | 105 | 1.8 | 1.1 × 10⁷ | Dissolved |
| Specimen 24 | Example 5 | Tray-Type Forced-Air Dryer | 105 | 1.5 | 1.4 × 10⁷ | Dissolved |
| Specimen 25 | Example 6 | Tray-Type Forced-Air Dryer | 105 | 1.4 | 1.7 × 10⁶ | Dissolved |
| Specimen 26 | Example 7 | Tray-Type Forced-Air Dryer | 105 | 1.4 | 8.0 × 10⁶ | Dissolved |
| Specimen 27 | Example 8 | Tray-Type Forced-Air Dryer | 105 | 1.5 | 4.0 × 10⁶ | Dissolved |
| Specimen 28 | Example 9 | Tray-Type Forced-Air Dryer | 105 | 1.5 | 7.5 × 10⁶ | Dissolved |
| Specimen 29 | Example 10 | Tray-Type Forced-Air Dryer | 105 | 1.4 | 4.4 × 10⁶ | Dissolved |
| Specimen 30 | Example 11 | Tray-Type Forced-Air Dryer | 105 | 1.4 | 3.6 × 10⁶ | Dissolved |
| Specimen 31 | Example 12 | Tray-Type Forced-Air Dryer | 105 | 1.5 | 1.0 × 10⁷ | Dissolved |
| Specimen 32 | Example 13 | Tray-Type Forced-Air Dryer | 105 | 1.5 | 1.02 × 10⁷ | Dissolved |
| Specimen 33 | Example 14 | Tray-Type Forced-Air Dryer | 105 | 1.6 | 1.05 × 10⁷ | Dissolved |
| Specimen 34 | Example 15 | Tray-Type Forced-Air Dryer | 105 | 1.5 | 1.03 × 10⁷ | Dissolved |
| Specimen 35 | Example 16 | Tray-Type Forced-Air Dryer | 105 | 1.5 | 4.2 × 10⁶ | Dissolved |
| Specimen 36 | Example 17 | Tray-Type Forced-Air Dryer | 105 | 1.5 | 3.8 × 10⁶ | Dissolved |
| Specimen 37 | Example 18 | Tray-Type Forced-Air Dryer | 105 | 1.4 | 2.7 × 10⁶ | Dissolved |
| Specimen 38 | Example 19 | Tray-Type Forced-Air Dryer | 105 | 1.4 | 2.1 × 10⁶ | Dissolved |
| Comparative Specimen 1 | Comparative Example 1 | Spray Dryer | 120 | 0.1 | 1.08 × 10⁷ | Adhering matter to wall surface |
| Comparative Specimen 2 | Comparative Example 2 | Spray Dryer | 120 | 0.1 | 7.5 × 10⁶ | Adhering matter to wall surface |
| Comparative Specimen 3 | Comparative Example 3 | Spray Dryer | 120 | 0.1 | 2.5 × 10⁶ | Adhering matter to wall surface |

### [Example 22]

A sewage mixed raw sludge (pH 6.34; SS content 26,500 mg/L) was used to perform a sludge-dewatering test using the powdery hydrophilic polymer of the present invention as a flocculating agent. The sewage mixed raw sludge (200 mL) was taken in a poly beaker, to which 0.80% (suspended particle mass %) of Specimens 26, 27, 29, 30, 35, and 36 of the hydrophilic polymers of the present invention in Table 3 were each added based on the SS content of the sludge. After transferred to another beaker and stirred 20 times, the sludge was filtered through a filter cloth (made of nylon) of T-1179L. The filtrate amount was measured at 10 seconds and the flock size was visually measured. After that, the sludge was filtered for 50 seconds and dewatered at a press pressure of 3 kg/m² for one minute. Subsequently, the detachability of the filter cloth was visually checked and the cake water content (dried at 105 °C for 20 hrs) was measured. The results are shown in Table 4.

### (Comparative Test Example 1)

Comparative Specimen 2 and a commercially available polyamidine flocculant (amidination rate; 86 mol %, weight average molecular weight; 3, 000, 000) were tested by the same procedure as in Example 22. The results are shown in Table 4.

**(Table 4)**

| | Specimen name | Flock size | Filtrate amount at 10 sec | Cake water content |
|---|---|---|---|---|
| Example 22 | Specimen 26 | 14 | 165 | 75.6 |
| | Specimen 27 | 11 | 155 | 75.4 |
| | Specimen 29 | 13 | 165 | 75.1 |
| | Specimen 30 | 14 | 170 | 74.9 |
| | Specimen 35 | 16 | 175 | 74.6 |
| | Specimen 36 | 17 | 175 | 74.2 |
| Comparative Test Example 1 | Comparative Specimen 2 | 10 | 135 | 76.9 |
| | Polyamidine flocculant | 11 | 95 | 75.9 |

| | | | | |
|---|---|---|---|---|
| (Flock size, mm; Filtrate amount at 10 seconds, mL; Cake water content, % by mass) | | | | |

It was found that the use of Comparative Specimen 2 was less effective in terms of both the filtrate amount (relevant to aggregation function) and the cake water content than that of Example 22. The use of the polyamidine flocculant decreased the cake water content while resulting in a small filtrate amount and thus poor aggregability.

### [Example 23]

The test for measuring the retention rate was performed with a dynamic jar tester (with a 200 mesh wire). As a material, a coated printing paper-making material which had 1.05 % by mass of a solid content and contained 2.5% (based on the pulp solid content) of calcium carbonate as a filler was used. The physical properties of the material were the following: pH 7.2; cation requirement of the filtrate by a Whatman No. 41 filter-paper, 0. 02 meq/L; turbidity 23 NTU; and SZP -14.0 mV. The cation requirement, turbidity, and SZP were measured using PCD-03 Model produced by Muteck, 2100P Model produced by HACH, and SZP-06 Model produced by Muteck, respectively. A given amount of the paper-making material was taken in the dynamic jar tester, to which 200 ppm (based on the pulp solid content) of Specimens 20 to 24, 26, and 31 to 34 of the powdery hydrophilic polymers of the present invention were each added as a retention aid. The mixture was stirred at a rotational speed of 1400 rpm for 30 seconds to obtain a solution to be filtered, which was then filtered through Advantec No. 2 filter paper. After that, the SS and the total retention rate were measured and then the filter paper was ashed at 525 °C for two hours to measure the ash content retention rate. The results are shown in Table 5.

### (Comparative Test Example 2)

The same material as in Example 23 was used to perform a similar test. To the material, 200 ppm (based on the pulp solid content) of Comparative Specimen 1 and a commercially available powder product (produced by Ciba, Percoll 182) were added as a retention aid. The mixture was stirred at a rotational speed of 1400 rpm for 30 seconds to obtain a solution to be filtered, which was then filtered through Advantec No. 2 filter paper. After that, the SS and the total retention rate were measured and then the filter paper was ashed at 525 °C for two hours to measure the ash content retention rate. The results are shown in Table 5.

**(Table 5)**

| | Specimen name | Total retention rate (%) | Ash content retention rate (%) |
|---|---|---|---|
| Example 23 | Specimen 20 | 75.9 | 50.2 |
| | Specimen 21 | 76.1 | 50.4 |
| | Specimen 22 | 76.3 | 50.7 |
| | Specimen 23 | 76.5 | 51.2 |
| | Specimen 24 | 77.6 | 53.3 |
| | Specimen 26 | 75.2 | 49.9 |
| | Specimen 31 | 77.5 | 52.7 |
| | Specimen 32 | 77.7 | 53.1 |
| | Specimen 33 | 77.4 | 52.4 |
| | Specimen 34 | 77.3 | 52.3 |
| Comparative Test Example 2 | Comparative Specimen 1 | 73.2 | 45.2 |
| | Commercially available powder product | 73.8 | 45.6 |

In Example 23 using the powdery hydrophilic polymer of the present invention, the total retention rates and ash content retention rates were found to be higher than those of Comparative Specimen 1 and the commercially available powder product.

### [Example 24]

As a material to be used, a paperboard liner making material which had 0.52% by mass of a solid content and contained 23.9% (based on the solid content) of ash content which was introduced as used paper was used to perform a test for measuring the drainage and sheet water content with a dynamic drainage analyzer (DDA) produced by Matsubo Corporation. The physical properties of the paper-making material were the following: pH 7.2; cation requirement of the filtrate by a Whatman No. 41 filter-paper, 0.003 meq/L; turbidity 109 NTU; and SZP -3.7 mV. The cation requirement, turbidity, and SZP were measured using PCD-03 Model produced by Muteck, 2100P Model produced by HACH, and SZP-06 Model produced by Muteck, respectively. The paper-making material was introduced into a DDA stirring tank with a 315 mesh wire at the bottom.

Specimens 20 to 24, 26, and 31 to 34 of the powdery hydrophilic polymers of the present invention were added as a drainage aid at 200 ppm based on the pulp solid content and stirred at a rotational speed of 1400 rpm for 30 seconds. The pulp was then sucked under a reduced pressure of 300 mBar. The drainage time until a sheet was formed on a wire and the water content of the formed sheet were measured. The results are shown in Table 6. A shorter drainage time indicated better drainage.

### (Comparative Test Example 3)

The same pulp as in Example 24 was used to perform the test for measuring the drainage and sheet water content with a dynamic drainage analyzer (DDA) produced by Matsubo Corporation. Comparative Specimen 1 and a commercially available powder product (produced by Ciba, Percoll 182) were added as a drainage aid at 200 ppm based on the pulp solid content and stirred at a rotational speed of 1400 rpm for 30 seconds. The pulp was then sucked under a reduced pressure of 300 mBar. The drainage time until a sheet was formed on a wire and the water content of the formed sheet were measured. The results are shown in Table 6.

**(Table 6)**

| | Specimen name | Drainage time (sec) | Sheet water content (%) |
|---|---|---|---|
| Example 24 | Specimen 20 | 13.5 | 77.7 |
| | Specimen 21 | 13.3 | 77.5 |
| | Specimen 22 | 13.7 | 77.6 |
| | Specimen 23 | 13.9 | 77.8 |
| | Specimen 24 | 12.8 | 77.2 |
| | Specimen 26 | 12.9 | 76.8 |
| | Specimen 31 | 13.3 | 76.2 |
| | Specimen 32 | 13.7 | 77.6 |
| | Specimen 33 | 13.6 | 77.4 |
| | Specimen 34 | 13.9 | 77.1 |
| Comparative Test Example 3 | Comparative Specimen 1 | 16.5 | 78.9 |
| | Commercially available powder product | 16.2 | 78.8 |

In Example 24 using the powdery hydrophilic polymer of the present invention, the drainage was better and the sheet water content was lower than those of Comparative Specimen 1 and the commercially available powder product. A lower sheet water content leads to improvement in dewaterability and reduction in the amount of dry steam in the press section and drying section of the paper-making process, thereby contributing to improvement in productivity.

### [Example 25]

The same paper-making material as in Example 24 was used to perform a paper strengthening effect test. A given amount of the paper-making material was taken, to which 0.3% by mass (based on the pulp solid content) of Specimens 37 and 38 of the powdery hydrophilic polymers of the present invention were added and stirred at a rotational speed of 1000 rpm for 30 seconds. Subsequently, 120 g/m² (by basis weight) of paper was filtered out with a TAPPI standard paper machine (with a 60 mesh wire). The obtained wet paper web was dewatered by pressing at 4.1 kgf/cm² for 5 minutes with a pressing machine and dried at 105 °C for 3 minutes in a rotary drum dryer, followed by moisture control under the conditions of 25 °C and RH 65% for 18 hours. A burst index and ash content in paper were measured according to JIS P8112. The results are shown in Table 7.

### (Comparative Test Example 4)

A given amount of the same paper-making material as in Example 24 was taken, to which 0.3% by mass (based on the pulp solid content) of Comparative Specimen 3 was added and stirred at a rotational speed of 1000 rpm for 30 seconds. Subsequently, 120 g/m² (by basis weight) of paper was filtered out with a TAPPI standard paper machine (with a 60 mesh wire). The obtained wet paper web was dewatered by pressing at 4.1 kgf/cm² for 5 minutes with a pressing machine and dried at 105 °C for 3 minutes in a rotary drum dryer, followed by moisture control under the conditions of 25 °C and RH 65% for 18 hours. A burst index and ash content in paper were measured according to JIS P8112. The results are shown in Table 7.

### [Example 26]

The same paper-making material as in Example 24 was used to perform a paper strengthening effect test. A given amount of the paper-making material was taken and a slurry in which a mixture of an undissolved potato starch or cationized starch and Specimen 25 of the powdery hydrophilic polymer of the present invention was dispersed in water was added to make 2% potato starch or cationized starch and 300 ppm of Specimen 25 of the powdery hydrophilic polymer of the present invention based on the pulp solid content. The obtained mixture was stirred at a rotational speed of 1000 rpm for 30 seconds. Subsequently, 120 g/m² (by basis weight) of paper was filtered out with a TAPPI standard paper machine (with a 60 mesh wire). The obtained wet paper web was dewatered by pressing at 4.1 kgf/cm² for 5 minutes with a pressing machine and dried at 105 °C for 3 minutes in a rotary drum dryer, followed by moisture control under the conditions of 25 °C and RH 65% for 18 hours. A burst index and ash content in paper were measured according to JIS P8112. The results are shown in Table 7.

### (Comparative Test Example 5)

A given amount of the same paper-making material as in Example 24 was taken and a slurry in which a mixture of an undissolved potato starch or cationized starch and Comparative Specimen 3 was dispersed in water was added to make 2% potato starch or cationized starch and 300 ppm of Comparative Specimen 1 based on the pulp solid content. The obtained mixture was stirred at a rotational speed of 1000 rpm for 30 seconds. Subsequently, 120 g/m² (by weight basis) of paper was filtered out with a TAPPI standard paper machine (with a 60 mesh wire). The obtained wet paper web was dewatered by pressing at 4.1 kgf/cm² for 5 minutes with a pressing machine and dried at 105 °C for 3 minutes in a rotary drum dryer, followed by moisture control under the conditions of 25 °C and RH 65% for 18 hours. A burst index and ash content in paper were measured according to JIS P8112. The results are shown in Table 7.

### [Example 27]

The same paper-making material as in Example 24 was used to perform a paper strengthening effect test. A given amount of the paper-making material was taken and 2% (based on the pulp solid content) of an aqueous solution obtained by heating a mixture of an undissolved potato starch or cationized starch and Specimen 37 of the powdery hydrophilic polymer of the present invention (mass ratio 9: 1) to gelatinize the starch was added. The obtained mixture was stirred at a rotational speed of 1000 rpm for 30 seconds. Subsequently, 120 g/m² (by basis weight) of paper was filtered out with a TAPPI standard paper machine (with a 60 mesh wire). The obtained wet paper web was dewatered by pressing at 4.1 kgf/cm² for 5 minutes with a pressing machine and dried at 105 °C for 3 minutes in a rotary drum dryer, followed by moisture control under the conditions of 25 °C and RH 65% for 18 hours. A burst index and ash content in paper were measured according to JIS P8112. The results are shown in Table 7.

### (Comparative Test Example 6)

A given amount of the same paper-making material as in Example 24 was taken and 2% (based on the pulp solid content) of an aqueous solution obtained by heating a mixture of an undissolved potato starch or cationized starch and Comparative Specimen 3 (molar ratio 9:1) to gelatinize the starch was added. The obtained mixture was stirred at a rotational speed of 1000 rpm for 30 seconds. Subsequently, 120 g/m² (by basis weight) of paper was filtered out with a TAPPI standard paper machine (with a 60 mesh wire). The obtained wet paper web was dewatered by pressing at 4.1 kgf/cm² for 5 minutes with a pressing machine and dried at 105 °C for 3 minutes in a rotary drum dryer, followed by moisture control under the conditions of 25 °C and RH 65% for 18 hours. A burst index and ash content in paper were measured according to JIS P8112. The results are shown in Table 7.

**(Table 7)**

| | Specimen name | Ash content in paper (%/ss) | Burst index (kpa/(g/m²)) |
|---|---|---|---|
| Example 25 | Specimen 37 | 14.2 | 2.92 |
| | Specimen 38 | 13.9 | 2.81 |
| Example 26 | Potato starch + Specimen 25 | 14.4 | 3.06 |
| | Cationized starch + Specimen 25 | 14.5 | 3.09 |
| Example 27 | Potato starch + Specimen 37 | 14.7 | 3.12 |
| | Cationized starch + Specimen 37 | 15.1 | 3.18 |
| Comparative Test Example 4 | Comparative Specimen 3 | 13.9 | 1.78 |
| Comparative Test Example 5 | Potato starch + Comparative Specimen 3 | 13.5 | 1.96 |
| | Cationized starch + Comparative Specimen 3 | 13.6 | 2.04 |
| Comparative Test Example 6 | Potato starch + Comparative Specimen 3 | 13.7 | 2.09 |
| | Cationized starch + Comparative Specimen 3 | 13.9 | 2.11 |

In Examples 25 to 27 using the powdery hydrophilic polymers of the present invention, the burst index was higher than that in Comparative Test Examples 4 to 6, showing that the paper strength was improved.

### INDUSTRIAL APPLICABILITY

The powdery hydrophilic polymer of the present invention is obtained by aggregating the hydrophilic polymer comprising the water-in-oil emulsion in a liquid form by emulsion breaking and then granulating the aggregate followed by drying. The powdery hydrophilic polymer can be used for various applications including flocculating agents, additives for paper-making, cosmetics, and COD removers.

## Claims

1. A powdery hydrophilic polymer obtained by subjecting a hydrophilic polymer comprising a water-in-oil emulsion to emulsion breaking to cause aggregation followed by drying and then grain refining.

2. The powdery hydrophilic polymer according to claim 1, wherein an emulsion breaker is added to the water-in-oil emulsion to perform the emulsion breaking.

3. The powdery hydrophilic polymer according to claim 2, wherein the emulsion breaker is at least one selected from an ionic surfactant, a nonionic surfactant having an HLB value of 11 to 20, and an oil-soluble polymer compound having a hydrophilic group and a hydrophobic group.

4. The powdery hydrophilic polymer according to claim 1, wherein the emulsion breaking is performed by applying mechanical shear.

5. The powdery hydrophilic polymer according to any of claims 1 to 4, wherein the emulsion breaker and the mechanical shear are used in combination for the emulsion breaking.

6. The powdery hydrophilic polymer according to any of claims 1 to 4, wherein the emulsion breaking involves heating.

7. The powdery hydrophilic polymer according to any of claims 1 to 6, wherein crushing and granulation are performed before drying.

8. The powdery hydrophilic polymer according to claim 1, wherein the hydrophilic polymer comprising the water-in-oil emulsion has at least one selected from the structural units represented by the following general formulas (1), (2), (3), (4), and (5): 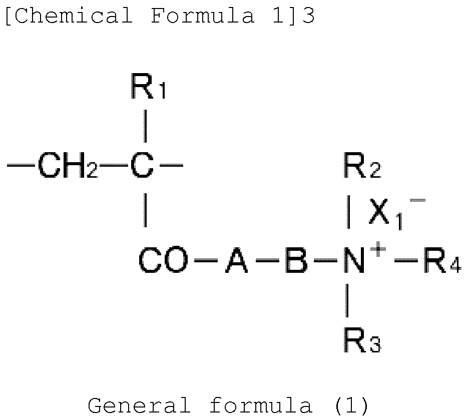 wherein, R₁ represents hydrogen or a methyl group, R₂ and R₃ each represent an alkyl group having 1 to 3 carbon atoms or an alkoxy group, R₄ represents hydrogen, an alkyl group having 1 to 3 carbon atoms, an alkoxy group, an alkyl group having 7 to 20 carbon atoms or an aryl group, and they may be the same or different, A represents O or NH, and B represents an alkylene group or alkoxylene group having 2 to 4 carbon atoms, and X₁⁻ represents an anion; 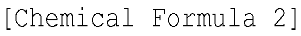 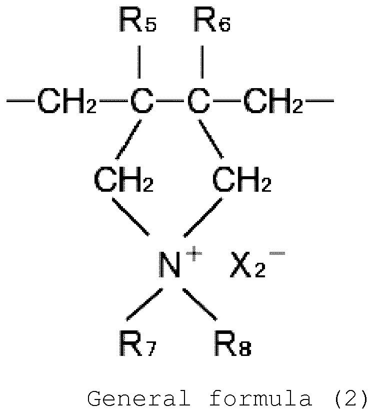 wherein, R₅ and R₆ each represent hydrogen or a methyl group, R₇ and R₈ each represent an alkyl group having 1 to 3 carbon atoms, an alkoxy group or a benzyl group, and X₂⁻ represents an anion; 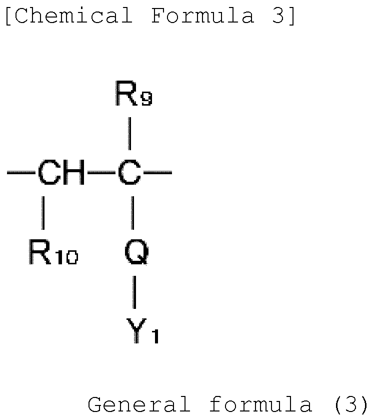 wherein, R₉ represents hydrogen or CH₂COOY₂, R₁₀ represents hydrogen, a methyl group or COOY₂, Q represents SO₃⁻, C₆H₄SO₃⁻, CONHC(CH₃)₂CH₂SO₃⁻, C₆H₄COO⁻ or COO⁻, and Y₁ and Y₂ each represent hydrogen or a cation; 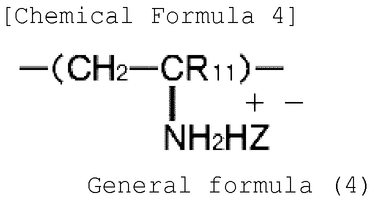 wherein, R₁₁ represents hydrogen or a methyl group, and H⁺Z⁻v represents an inorganic acid and/or an organic acid, and H⁺Z⁻ = 0 when unneutralized; 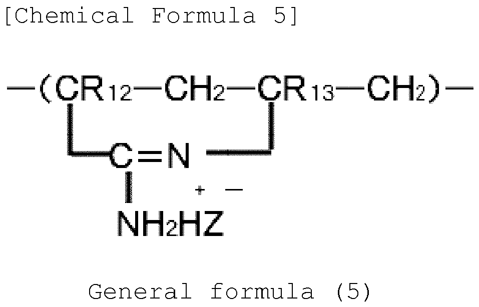 wherein, R₁₂ and R₁₃ represent hydrogen or a methyl group, and H⁺Z⁻ represents an inorganic acid and/or an organic acid, and H⁺Z⁻ = 0 when unneutralized.

9. The powdery hydrophilic polymer according to claim 1 or 8, wherein the hydrophilic polymer comprising the water-in-oil emulsion contains 80 to 100 mol % of the structural unit represented by the general formula (1) or (2) and 0 to 20 mol % of the structural unit represented by the general formula (3).

10. The powdery hydrophilic polymer according to claim 1, 8 or 9, wherein the hydrophilic polymer comprising the water-in-oil emulsion is obtained by polymerization in the presence of a crosslinkable monomer.

11. The powdery hydrophilic polymer according to any of claims 1 to 7, wherein the hydrophilic polymer comprises a mixture of the following hydrophilic polymers (A) and (B):
Hydrophilic polymer (A);
including 80 to 100 mol % of the structural unit represented by the following general formula (6), 0 to 20 mol % of the structural unit represented by the general formula (3), and 0 to 20 mol % of a nonionic monomer structural unit, and obtained by polymerization with addition of 20 to 300 ppm by mass of a crosslinkable monomer based on monomers or a monomer mixture corresponding to the above structural units in the polymerization.
Hydrophilic polymer (B);
obtained by polymerization of a monomer mixture including 80 to 100 mol % of the structural unit represented by the following general formula (7) or the general formula (2), 0 to 20 mol % of the structural unit represented by the general formula (3), and 0 to 20 mol % of a nonionic monomer structural unit, 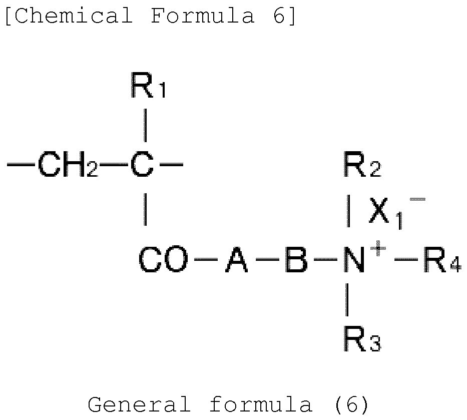
wherein, R₁ represents hydrogen or a methyl group, R₂ and R₃ each represent an alkyl group having 1 to 3 carbon atoms or an alkoxy group, and R₄ represents an alkyl group having 7 to 20 carbon atoms or an aryl group, A represents O or NH, and B represents an alkylene group having 2 to 4 carbon atoms or an alkoxylene group, and X₁⁻ represents an anion, 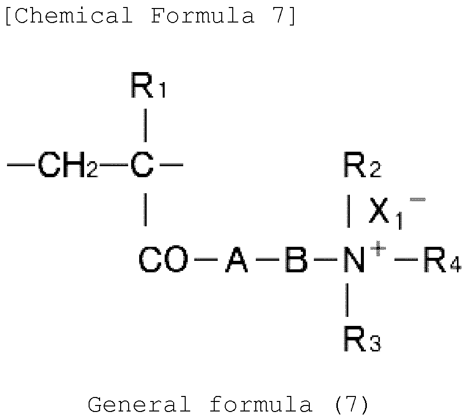 wherein, R₁ represents hydrogen or a methyl group, R₂ and R₃ each represent an alkyl group having 1 to 3 carbon atoms or an alkoxy group, and R₄ represents hydrogen, an alkyl group having 1 to 3 carbon atoms or an alkoxy group, A represents O or NH, and B represents an alkylene group having 2 to 4 carbon atoms or an alkoxylene group, and X₁⁻ represents an anion.

12. The powdery hydrophilic polymer according to any one of claims 1 to 7 and 11, wherein the powdery hydrophilic polymer comprises a mixture of the following hydrophilic polymers (A) and (C) :
Hydrophilic polymer (A);
including 80 to 100 mol % of the structural unit represented by the general formula (6), 0 to 20 mol % of the structural unit represented by the general formula (3), and 0 to 20 mol % of a nonionic monomer structural unit, and obtained by polymerization with addition of 20 to 300 ppm by mass of a crosslinkable monomer based on monomers or a monomer mixture corresponding to the above structural units in the polymerization;
Hydrophilic polymer (C);
including 80 to 100 mol % of the structural unit represented by the general formula (7) or (2), 0 to 20 mol % of the structural unit represented by the general formula (3), and 0 to 20 mol % of a nonionic monomer structural unit, and obtained by polymerization with addition of 20 to 300 ppm by mass of a crosslinkable monomer based on monomers or a monomer mixture corresponding to the above structural units in the polymerization.

13. The powdery hydrophilic polymer according to any of claims 1 to 12, wherein an average particle diameter thereof falls within a range of 0.3 to 5 mm.

14. A method for producing a powdery hydrophilic polymer, subjecting a hydrophilic polymer comprising a water-in-oil emulsion to emulsion breaking to cause aggregation followed by drying and then grain refining.

15. A flocculating agent comprising the powdery hydrophilic polymer according to any of claims 1 to 13.

16. A retention aid or a drainage aid comprising the powdery hydrophilic polymer according to any of claims 1 to 13.

17. A paper strengthening agent comprising the powdery hydrophilic polymer according to any of claims 1 to 13, and at least one selected from a raw starch, a cationized starch, an amphoteric starch, and a modified starch.
